(19)

Europäisches
Patentamt
European
Patent Office
Office européen
des brevets

(11) **EP 1 947 883 A1**

(12) **EUROPEAN PATENT APPLICATION**

(43) Date of publication:
**23.07.2008 Bulletin 2008/30**

(51) Int Cl.:
***H04Q 7/38*** (2006.01) ***H04Q 7/32*** (2006.01)

(21) Application number: **07021467.1**

(22) Date of filing: **05.11.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (71) Applicant: **Samsung Electronics Co., Ltd<br>Yeongtong-gu<br>Suwon-si, Gyeonggi-do (KR)** |
| (30) Priority: **19.01.2007 KR 20070005929** | (72) Inventor: **Choi, Jong-Mu<br>Gunpo-si, Gyeonggi-do (KR)**<br><br>(74) Representative: **Harrison Goddard Foote<br>106 Micklegate<br>York<br>YO1 6JX (GB)** |

(54) **Apparatus and method for deciding handover in a dual-mode portable terminal**

(57)     Deciding a handover in a dual mode portable terminal supporting a cellular network and an unlicensed ISM (Industrial, Scientific and Medical) band network based on a Carrier Sensing Multiple Access with Collision Avoidance (CSMA/CA) scheme is provided. The method includes checking for an available throughput of an Access Point (AP) by analyzing a signal received from the AP of the unlicensed-band network while using the cellular network; determining whether the AP can provide a service provided through the cellular network by using the available throughput of the AP; and if it is determined that the AP can provide the service, deciding whether to handover to the AP by measuring a strength of the received signal.

FIG.2A

EP 1 947 883 A1

**Description**

**PRIORITY**

This application claims priority under 35 U.S.C. § 119 to an application filed in the Korean Intellectual Property Office on January 19, 2007 and assigned Serial No. 2007-5929, the contents of which are incorporated herein by reference.

**BACKGROUND OF THE INVENTION**

1. Field of the Invention

The present invention relates to a method and apparatus for deciding a handover in a dual mode portable terminal supporting a cellular network and an unlicensed-band network based on a Carrier Sensing Multiple Access with Collision Avoidance (CSMA/CA) scheme, and in particular, to a method and apparatus for deciding a handover to the unlicensed-band network in consideration of a maximum throughput that can be supported by an Access Point (AP) connected to the unlicensed-band network when a portable terminal is currently connected to the cellular network. The unlicensed-band network is a network using an unlicensed-band, such as, WiFi (IEEE 802.11, HyperLan), Bluetooth®, 802.15.4, Ultra Wide Band (UWB), and so on.

2. Description of the Related Art

Portable terminals have recently provided support for handover between a cellular network and an unlicensed network in both voice and data sessions, and thus communication is achieved when the portable terminal moves between the cellular network and the unlicensed-band network. When such a portable terminal is located near a base station (or Access Point (AP)) of the unlicensed-band network, a process for registering the portable terminal to the AP is performed, so that a service provided through the cellular network can be received through the unlicensed-band network.

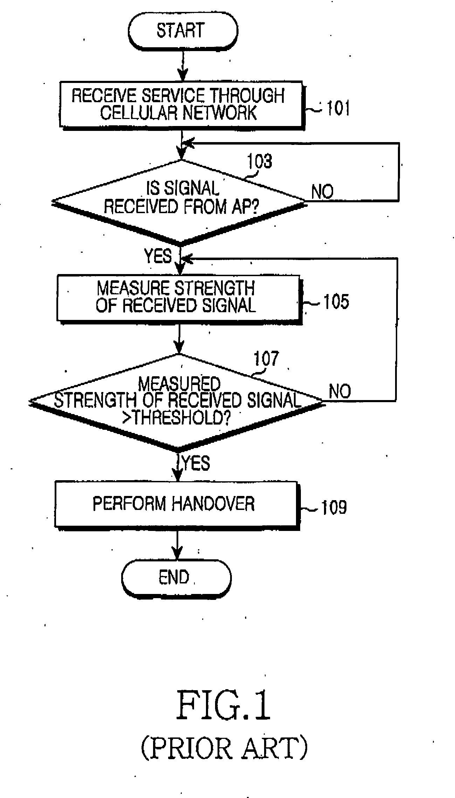

FIG. 1 is a flowchart illustrating a process in which a handover to an unlicensed-band network is performed in a portable terminal according to the prior art. The unlicensed-band network is a WiFi network, for example.

Referring to FIG. 1, in step 101, voice and data services are received through a cellular network. In step 103, it is determined whether a beacon signal is received from an AP of the WiFi network.

Upon detecting the beacon signal, in step 105, the strength of the received signal is measured. In step 107, the measured strength of the signal is compared with a threshold value to determine whether the AP is registered. If the measured strength of the signal is less than or equal to the threshold value, the procedure returns to step 105 so that the strength of the received beacon signal is measured again. Otherwise, in step 109, the handover is performed to the AP of the WiFi network. Then, the procedure is ended.

As such, in the conventional portable terminal, a handover is decided by only using the strength of the received signal from the AP. However, when the portable terminal is used in a network, which uses an unlicensed-band based on a Carrier Sensing Multiple Access with Collision Avoidance (CSMA/CA) scheme, the service speed is limited according to the number of users registered to the AP. Therefore, when the handover to the AP of the unlicensed-band network is performed by using only the strength of the received signal, service provision may not be possible due to the users pre-registered to the AP.

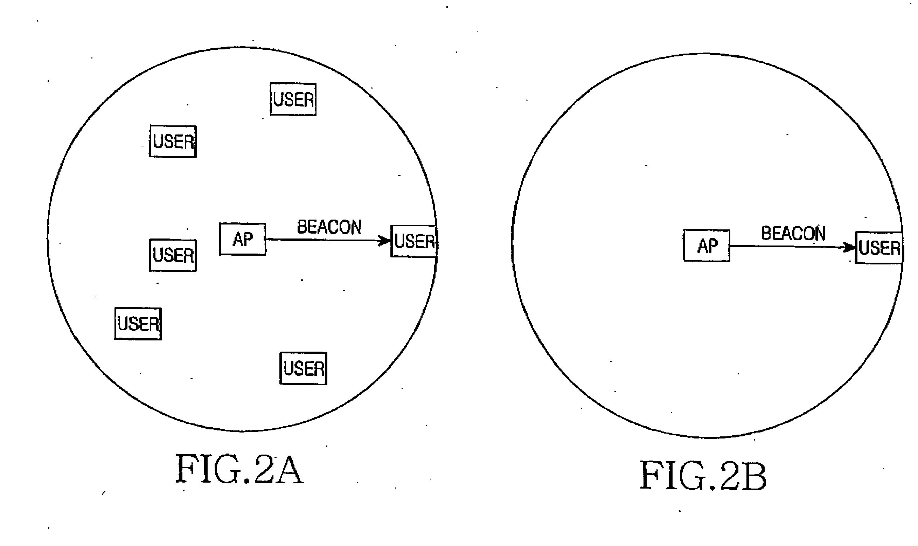

In other words, the portable terminal receives a constant strength of the signal from the AP if the signal is received in the same condition in both cases where many users are registered as shown in the diagram of FIG. 2A and where no user is registered as shown in the diagram of FIG. 2B. Thus, the condition of the AP, that is, the maximum service speed that can be provided by the AP cannot be predicted. Therefore, when the portable terminal performs a handover by using only the strength of the received signal, it constitutes a problem in that the service cannot be provided from the AP due to the pre-registered users.

**SUMMARY OF THE INVENTION**

The present invention provides a method and apparatus for deciding a handover in a dual mode portable terminal supporting a cellular network and an unlicensed-band network based on a Carrier Sensing Multiple Access with Collision Avoidance (CSMA/CA) scheme.

The present invention also provides a method and apparatus for deciding a handover in consideration of the number of users registered to an Access Point (AP) of an unlicensed-band network in a dual mode portable terminal supporting a cellular network and the unlicensed-band network.

According to a first aspect of the present invention, there is provided a method of deciding a handover in a dual mode portable terminal supporting a cellular network and an unlicensed-band network, including checking for an available throughput of an AP by analyzing a signal received from the AP of the unlicensed-band network while using the cellular network; determining whether the AP can provide a service provided through the cellular network by using the available throughput of the AP; and if it is determined that the AP can provide the service, deciding whether to handover to the AP by measuring the strength of the received signal.

According a second aspect of the present invention, there is provided a method of operating an AP of an unlicensed-band network for deciding a handover in a portable terminal, including computing the available throughput according to the number of users currently registered; and inserting the computed available throughput to a beacon signal and transmitting the beacon signal to the portable terminal.

According to a third aspect of the present invention, there is provided an apparatus for deciding a handover in a dual mode portable terminal supporting a cellular network and an unlicensed-band network, including a communication module for receiving a signal from an AP of the unlicensed-band network while using the cellular network; and a handover determining unit for deciding whether to handover to the AP by using the available throughput obtained from the received signal and using the strength of the received signal.

According to a fourth aspect of the present invention, there is provided an apparatus for operating an AP of an unlicensed-band network for deciding a handover in a portable terminal, including a user manager for computing an available throughput according to the number of users currently registered; and a communication module for inserting the computed available throughput to a beacon signal and transmitting the beacon signal to the portable terminal.

**BRIEF DESCRIPTION OF THE DRAWINGS**

The above and other objects, features and advantages of the present invention will become more apparent from the following detailed description when taken in conjunction with the accompanying drawings in which:

FIG. 1 is a flowchart of a process in which a handover to an unlicensed-band network is performed in a portable terminal according to the prior art;

FIGs. 2A and 2B are views for illustrating the number of users registered to an Access Point (AP) of an unlicensed-band network;

FIG. 3 is a block diagram illustrating an AP and a portable terminal (or user) in an unlicensed-band network according to the present invention;

FIG. 4 is a flowchart of a process of transmitting a beacon signal in an AP of an unlicensed-band network according to the present invention; and

FIG. 5 is a flowchart of a process in which a handover is performed to an unlicensed-band network in a portable terminal according to the present invention.

**DETAILED DESCRIPTION OF THE PREFERRED EMBODIMENTS**

A preferred embodiment of the present invention will be described herein below with reference to the accompanying drawings. In the following description, well-known functions or constructions are not described in detail since they would obscure the invention in unnecessary detail.

A method and apparatus for deciding a handover in a dual mode portable terminal supporting a cellular network and an unlicensed-band network based on a Carrier Sensing Multiple Access with Collision Avoidance (CSMA/CA) scheme in consideration of the number users registered to an Access Point (AP) of the unlicensed-band network are described. The unlicensed-band network uses the unlicensed Industrial, Science, and Medical (ISM) wireless frequency band. Examples of the unlicensed-band include WiFi (IEEE 802.11, HyperLan), Bluetooth, 802.15.4, and Ultra Wide Band (UWB). The present invention applies to all unlicensed-band networks, and as an example the WiFi network will be described hereinafter.

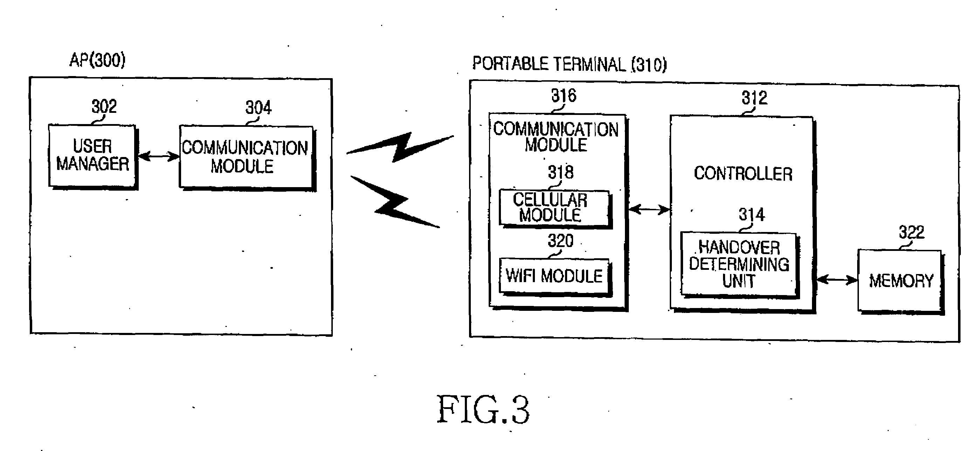

Referring to FIG. 3, AP 300 includes a user manager 302 and a communication module 304. Portable terminal 310 includes a controller 312, a communication module 316, and a memory 322. Controller 312 includes a handover determining unit 314. Communication module 316 includes a cellular module 318 and a WiFi module 320. User manager 302 checks the number of users registered to AP 300, and computes a currently available throughput of AP 300, that is, a service speed that can be supported by AP 300. Herein, the currently available throughput may be computed using a maximum available throughput that can be currently supported by AP 300 and the number of users currently registered to AP 300. The available throughput may be computed in different manners according to whether AP 300 supports a differentiated service depending on a user level. The available throughput can be computed using Equation (1) or (2).

Equation (1) represents the available throughput when the AP 300 is a non-QoS (Quality of Service) AP.

$$\text{Available throughput} = \text{maximum available throughput} / (\text{number of currently registered users} + 1)\dots\dots\dots\dots\dots\dots \quad (1)$$

In Equation (1), the available throughput can be computed only when AP 300 supports a differentiated service depending on a user level on the basis of the non-QoS.

Equation (2) represents the available throughput when AP 300 is a QoS AP.

$$\text{Available throughput} = (\text{maximum available throughput} * \text{priority of portable terminal}) / (\text{sum of priorities of currently registered users} + \text{priority of portable terminal})\dots\dots\dots\dots\dots\dots\dots \quad (2)$$

In Equation (2), the available throughput can be computed only when the AP supports a differentiated service depending on the user level on the basis of the QoS. The priority of the portable terminal is the priority of a portable terminal that attempts to be registered to the AP. The higher the priority, the earlier the portable terminal can be registered.

Communication module 304 processes a signal transmitted to and received from portable terminal 310. Further, communication module 304 inserts the currently available throughput provided from user manager 302 into a beacon signal, and then transmits the beacon signal to portable terminal 310.

Controller 312 processes and controls voice calls and data communications of portable terminal 310. In particular, controller 312 includes handover determining unit 314. Thus, when the beacon signal is received from AP 300 while using a cellular-based service, controller 312 decides whether to handover to AP 300 by using the currently available throughput of AP 300 included in the beacon signal and using the strength of the beacon signal received.

Handover determining unit 314 analyzes the beacon signal of AP 300, received from communication module 316. Then, handover determining unit 314 checks for the currently available throughput and compares it with a throughput threshold in association with a cellular network to which the AP 300 is currently connected. Herein, the throughput threshold is a value for determining whether the available throughput of AP 300 can support the service provided through the cellular network currently connected. The throughput threshold may vary depending on a type of the cellular network.

If the currently available throughout is greater than the predetermined throughput threshold, handover determining unit 314 measures the strength of the received beacon signal, compares it with a predetermined AP registration threshold, and thus decides whether to handover to AP 300. The AP registration threshold is a threshold of strength of the received signal and is used to decide whether to handover to AP 300. Handover determining unit 314 may decide to handover to AP 300 when the currently available throughput of the AP, which is checked from the beacon signal, is greater than the predetermined available throughput and when the strength of the received beacon signal is greater than the predetermined AP registration threshold.

Communication module 316 includes cellular module 318 and WiFi module 320 and thus processes signals transmitted/received through the cellular network and the WiFi network. In particular, communication module 316 receives a beacon signal from AP 300, which is a base station of the WiFi network and provides the beacon signal to controller 312. Under the control of controller 312, a handover to AP 300 is performed from the cellular network.

Memory 322 stores programs for controlling general operations of portable terminal 310 and also stores various data. In particular, memory 322 stores a throughput threshold of the cellular network and the AP registration threshold. The throughput threshold may be received from the cellular network or may be predetermined through experimentation.

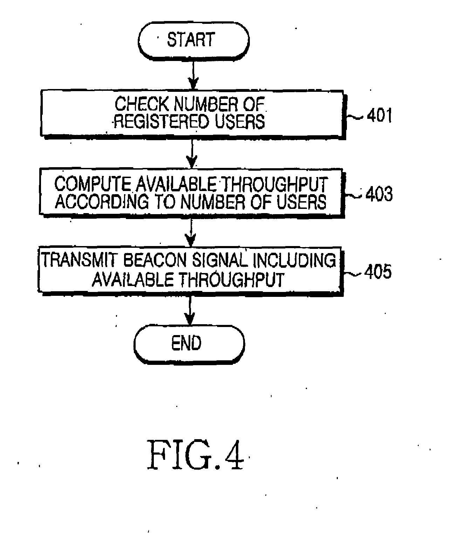

Referring to FIG. 4, in step 401, the AP periodically checks the number of users currently registered to the AP itself. In step 403, the currently available throughput is computed using the number of users. The currently available throughput can be computed using Equation (1) or (2) according to whether the AP supports a differentiated service depending on the user level.

In step 405, a beacon signal including the currently available throughput computed is transmitted to an adjacent portable terminal, and the procedure is then ended.

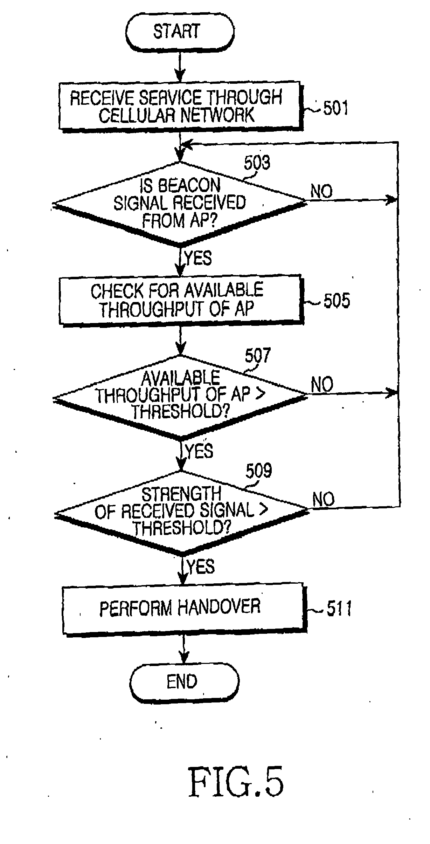

Referring to FIG. 5, in step 501, the portable terminal receives voice and data services through a cellular network. In step 503, the portable terminal checks whether a beacon signal is received from an AP.

Upon receiving the beacon signal from the AP, in step 505, the portable terminal analyzes the beacon signal to check a currently available throughput of the AP. In step 507, the currently available throughput is compared with a throughput threshold for the cellular network currently being used, so as to determine whether a service that can be provided through the cellular network can be received from the AP. If the currently available throughput of the AP is less than or equal to the throughput threshold, the portable terminal decides that the AP cannot provide the service. Then, the procedure returns to step 503, and the subsequent steps are performed again.

On the other hand, if the currently available throughput of the AP is greater than the throughput threshold, the portable terminal decides that the AP can provide the service. Then, the procedure goes to step 509. In step 509, the strength of the received beacon signal is measured and then compared with a predetermined AP registration threshold. If the measured strength of the received signal is less then or equal to the predetermined AP registration threshold, the procedure returns to step 503, and the subsequent steps are performed again.

If the measured strength of the received signal is greater than the predetermined AP registration threshold, the procedure goes to step 511. In step 511, a handover to the AP of the WiFi network is decided and performed. Then, the procedure is ended.

Although the available throughput of the AP is determined by the AP and is then transmitted to the portable terminal, the AP may transmit the number of currently registered users and the maximum available throughput to the portable terminal so that the portable terminal can compute the available throughput of the AP.

According to the present invention, in a dual mode portable terminal supporting a cellular network and an unlicensed-band network based on a Carrier Sensing Multiple Access with Collision Avoidance (CSMA/CA) scheme, whether to handover to the unlicensed-band network is decided in consideration of the number of users registered to an Access Point (AP). Therefore, since the handover is performed only when the AP of the unlicensed-band network can sufficiently support services, the problem in which a service provided through the cellular network cannot be received through the unlicensed-band network is solved, As a result, there is an advantage in that services can be continuously provided to the users.

While the invention has been shown and described with reference to certain preferred embodiments thereof, it will be understood by those skilled in the art that various changes in form and details may be made therein without departing from the spirit and scope of the invention as further defined by the appended claims.

**Claims**

1. A method of deciding a handover in a dual mode portable terminal supporting a cellular network and an unlicensed-band network, comprising the steps of:

    checking for an available throughput of an Access Point (AP) by analyzing a signal received from the AP of the unlicensed-band network while using the cellular network;
    determining whether the AP can provide a service provided through the cellular network by using the available throughput of the AP; and
    deciding whether to handover to the AP by measuring a strength of the received signal, if it is determined that the AP can provide the service.

2. The method of claim 1, wherein the available throughput of the AP is computed using a maximum available throughput of the AP and using the number of users currently registered to the AP.

3. The method of claim 1, wherein the available throughput of the AP is computed using the maximum available throughput of the AP, priorities of the users currently registered to the AP, and priority of the portable terminal.

4. The method of claim 1, wherein the step of determining whether the AP can provide a service provided through the cellular network comprises:

    comparing the available throughput of the AP with a throughput threshold of the cellular network currently being used; and
    determining that the AP can provide the service provide through the cellular network, if the available throughput of the AP is greater than the throughput threshold.

5. The method of claim 4, if the available throughput of the AP is less than or equal to the throughput threshold, further comprising determining that the AP cannot provide the service provided through the cellular network.

6. The method of claim 1, wherein the step of deciding whether to handover to the AP further comprises:

    comparing the measured strength of the received signal with an AP registration threshold; and

deciding to handover to the AP, if the measured strength of the received signal is greater than the AP registration threshold.

7. The method of claim 6, further comprising deciding not to handover to the AP, if the measured strength of the received signal is less than or equal to the AP registration threshold.

8. A method of operating an Access Point (AP) of an unlicensed-band network for deciding a handover in a portable terminal, comprising the steps of:

    computing an available throughput according to the number of users currently registered; and
    inserting the computed available throughput to a beacon signal and transmitting the beacon signal to the portable terminal.

9. The method of claim 8, wherein the available throughout of the AP is computed using a maximum available throughput of the AP and using the number of users currently registered to the AP.

10. The method of claim 8, wherein the available throughput of the AP is computed using the maximum available throughput of the AP, priorities of the users currently registered to the AP, and priority of the portable terminal,

11. An apparatus for deciding a handover in a dual mode portable terminal supporting a cellular network and an unlicensed-band network, comprising:

    a communication module for receiving a signal from an Access Point (AP) of the unlicensed-band network while using the cellular network; and
    a handover determining unit for deciding whether to handover to the AP by using the available throughput obtained from the received signal and using a strength of the received signal.

12. The apparatus of claim 11, wherein the available throughout of the AP is computed using a maximum available throughput of the AP and using the number of users currently registered to the AP.

13. The apparatus of claim 11, wherein the available throughput is computed using the maximum available throughput of the AP, priorities of the users currently registered to the AP, and priority of the portable terminal.

14. The apparatus of claim 11, wherein the handover determining unit decides to handover to the AP if the available throughput obtained from the received signal is greater than a throughput threshold of the cellular network currently being used and if the strength of the received beacon signal is greater than an AP registration threshold.

15. An apparatus for operating an Access Point (AP) of an unlicensed-band network for deciding a handover in a portable terminal, comprising:

    a user manager for computing an available throughput according to the number of users currently registered; and
    a communication module for inserting the computed available throughput to a beacon signal and transmitting the beacon signal to the portable terminal.

16. The apparatus of claim 15, wherein the available throughout of the AP is computed using a maximum available throughput of the AP and using the number of users currently registered to the AP.

17. The apparatus of claim 15, wherein the available throughput of the AP is computed using the maximum available throughput of the AP, priorities of the users currently registered to the AP, and priority of the portable terminal.

18. A method for deciding a handover in a dual mode portable terminal supporting a cellular network and an unlicensed-band network, comprising:

    receiving a signal from an Access Point (AP) of the unlicensed-band network while using the cellular network; and
    deciding whether to handover to the AP by using the available throughput obtained from the received signal and using a strength of the received signal.

```
                    ┌─────────────┐
                    │    START    │
                    └──────┬──────┘
                           │
                           ▼
          ┌────────────────────────────────┐
          │  RECEIVE SERVICE THROUGH       │─ 101
          │       CELLULAR NETWORK         │
          └────────────────┬───────────────┘
                           │
                           ▼
                        ╱──────╲    103
                      ╱  IS SIGNAL ╲    NO
                     ⟨ RECEIVED FROM AP? ⟩─────────┐
                      ╲            ╱               │
                        ╲────────╱                 │
                           │ YES                   │
                           ▼                       │
          ┌────────────────────────────────┐       │
          │      MEASURE STRENGTH          │─ 105   │
          │     OF RECEIVED SIGNAL         │       │
          └────────────────┬───────────────┘       │
                           │                       │
                           ▼                       │
                        ╱──────╲    107            │
                      ╱ MEASURED  ╲    NO           │
                  ⟨ STRENGTH OF RECEIVED SIGNAL ⟩───┘
                      ╲ >THRESHOLD? ╱
                        ╲────────╱
                           │ YES
                           ▼
          ┌────────────────────────────────┐
          │      PERFORM HANDOVER          │─ 109
          └────────────────┬───────────────┘
                           │
                           ▼
                    ┌─────────────┐
                    │     END     │
                    └─────────────┘
```

# FIG.1
## (PRIOR ART)

USER

BEACON

AP

FIG.2B

USER

USER

BEACON

USER

AP

USER

USER

FIG.2A

PORTABLE TERMINAL (310)

302

304

316

312

USER
MANAGER

COMMUNICATION
MODULE

COMMUNICATION
MODULE

318

CONTROLLER

CELLULAR
MODULE

314

320

HANDOVER
DETERMINING
UNIT

322

WIFI MODULE

MEMORY

EP 1 947 883 A1

FIG.3

START

CHECK NUMBER OF REGISTERED USERS ~401

COMPUTE AVAILABLE THROUGHPUT ACCORDING TO NUMBER OF USERS ~403

TRANSMIT BEACON SIGNAL INCLUDING AVAILABLE THROUGHPUT ~405

END

# FIG.4

START

RECEIVE SERVICE THROUGH
CELLULAR NETWORK —501

IS BEACON
SIGNAL RECEIVED
FROM AP? —503 — NO

YES

CHECK FOR AVAILABLE
THROUGHPUT OF AP —505

AVAILABLE
THROUGHPUT OF AP >
THRESHOLD? —507 — NO

YES

STRENGTH
OF RECEIVED SIGNAL >
THRESHOLD? —509 — NO

YES

PERFORM HANDOVER —511

END

FIG.5

**EP 1 947 883 A1**

**European Patent Office**

## EUROPEAN SEARCH REPORT

Application Number

EP 07 02 1467

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2007/008573 A (QUALCOMM INC [US]; DRAVIDA SUBRAHMANYAM [US]; WALTON JAY RODNEY [US];) 18 January 2007 (2007-01-18) * abstract * * paragraph [0002] - paragraph [0003] * * paragraphs [0010], [0050] * * paragraph [0070] - paragraph [0071] * * figures 5,9 * | 1-18 | INV. H04Q7/38 H04Q7/32 |
| Y | US 2006/171348 A1 (NOKANO HIROYUKI [JP] NAKANO HIROYUKI [JP]) 3 August 2006 (2006-08-03) * paragraphs [0003], [0013] * * paragraph [0037] - paragraph [0039] * * paragraph [0058] - paragraph [0060] * * paragraph [0072] - paragraph [0077] * * figures 2,5,9,10 * | 1-18 | |
| A | JUNFENG JIANG ET AL: "A traffic probing based handoff algorithm for heterogeneous networks" COMMUNICATIONS, 2004 AND THE 5TH INTERNATIONAL SYMPOSIUM ON MULTI-DIME NSIONAL MOBILE COMMUNICATIONS PROCEEDINGS. THE 2004 JOINT CONFERENCE O F THE 10TH ASIA-PACIFIC CONFERENCE ON BEIJING, CHINA 29 AUG.-1 SEPT. 2004, PISCATAWAY, NJ, USA,IEEE, US, vol. 1, 29 August 2004 (2004-08-29), pages 263-267, XP010765329 ISBN: 978-0-7803-8601-3 * abstract * * page 263, paragraph I - page 265, paragraph II * * figure 1 * | 1-18 | TECHNICAL FIELDS SEARCHED (IPC) H04Q |

-/--

The present search report has been drawn up for all claims

| Place of search | Date of completion of the search | Examiner |
|---|---|---|
| Munich | 6 June 2008 | Rosenauer, Hubert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 947 883 A1**

**EUROPEAN SEARCH REPORT**

Application Number

EP 07 02 1467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 156 623 A (LUCENT TECHNOLOGIES INC [US]) 21 November 2001 (2001-11-21) * paragraph [0019] - paragraph [0031] * * figures 1,4,5 * | 1-18 | |
| A | US 2006/245408 A1 (LEE SANG-DO [KR] ET AL) 2 November 2006 (2006-11-02) * abstract * * paragraphs [0003], [0048] * * paragraph [0114] - paragraph [0118] * * paragraph [0125] * * figures 10,11 * | 1,8,11, 15 | |

TECHNICAL FIELDS SEARCHED (IPC)

The present search report has been drawn up for all claims

| Place of search | Date of completion of the search | Examiner |
|---|---|---|
| Munich | 6 June 2008 | Rosenauer, Hubert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

13

## EP 1 947 883 A1

### ANNEX TO THE EUROPEAN SEARCH REPORT
### ON EUROPEAN PATENT APPLICATION NO.

EP 07 02 1467

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2008

| Patent document cited in search report | | Publication date | Patent family member(s) | | Publication date |
|---|---|---|---|---|---|
| WO 2007008573 | A | 18-01-2007 | AR | 054545 A1 | 27-06-2007 |
| | | | AU | 2006269392 A1 | 18-01-2007 |
| | | | CA | 2614469 A1 | 18-01-2007 |
| | | | EP | 1911221 A2 | 16-04-2008 |
| | | | US | 2007008925 A1 | 11-01-2007 |
| US 2006171348 | A1 | 03-08-2006 | JP | 2006217011 A | 17-08-2006 |
| EP 1156623 | A | 21-11-2001 | DE | 60026454 T2 | 09-11-2006 |
| | | | EP | 1670234 A2 | 14-06-2006 |
| | | | US | 2007109980 A1 | 17-05-2007 |
| | | | US | 2002110105 A1 | 15-08-2002 |
| US 2006245408 | A1 | 02-11-2006 | KR | 20060114482 A | 07-11-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20075929